# EUROPEAN PATENT SPECIFICATION

(11) **EP 3 364 081 B1**
(45) Date of publication and mention of the grant of the patent: **12.02.2020**
(21) Application number: 15907052.3
(22) Date of filing: 16.11.2015
(51) Int. Cl.: F16K 17/36, F16K 17/18, F16K 17/00, A62B 13/00

(54) **ANTIKNOCK VALVE WITH BOTH SIDES RESISTING SHOCK WAVE**
KLOPFFESTES VENTIL MIT BEIDSEITIGER STOSSWELLENBESTÄNDIGKEIT
SOUPAPE ANTI-COUP AVEC DEUX CÔTÉS RÉSISTANT À UNE ONDE DE CHOC

(30) Priority: 30.10.2015 CN 201510733938
(43) Date of publication of application: 22.08.2018
(73) Proprietor: Wuxi Fucare Industrial Co., Ltd, Hudai Industrial Park Wuxi Jiangsu (CN)
(72) Inventor: XIE, Jun, Wuxi Jiangsu 214161 (CN)
(74) Representative: Sun, Yiming
(86) International application number: PCT/CN2015/094650
(87) International publication number: WO 2017/070991

(56) References cited:
- EP-A2- 0 099 130
- BE-A- 897 626
- CN-A- 101 038 142
- CN-U- 202 091 768
- CN-U- 202 992 294
- GB-A- 987 363
- KR-A- 20110 108 629
- KR-A- 20150 028 428

## Description

### Field of Invention

The present invention relates to the field of ventilation equipment of fresh air entrance and exhaust ventilation outlet in buildings, and more particularly to the ventilation valves of fresh air inlets and exhaust outlets of buildings with potential explosion shock wave hazards, in particular to an antiknock valve with both sides resisting shock wave and a valve body thereof.

### Background of the invention

There are two stages in the explosion shock wave that will cause serious damage. In the first stage, the center point of the explosion will release shock wave with pressure up to tens of thousands of atmospheric pressure on the first settlement. The shock wave will form a spherical surface at high speed and have serious impact damages. With the increase of distance of the shock wave from the center point of explosion, the pressure of the shock wave will rapidly decay. In the second stage, the air in the explosion center will generate negative pressure due to the decompression of air, resulting in a strong negative pressure wave. When the negative pressure wave is generated, the pressure in the building is greater than the outdoor pressure, and the ventilation valve will be being pushed out by pressure. A certain level of negative pressure waves can also cause damage to the facilities in the building, especially when the ventilation valve is close to the center point of the explosion.

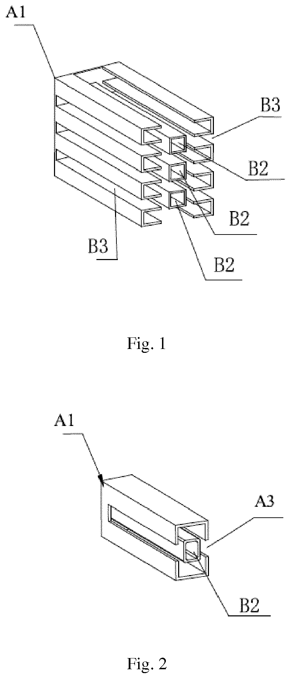

As shown in Fig. 1 and Fig. 2, in the conventional art, antiknock valve with both sides resisting shock wave mainly adopts one to three valve cores B2 with a cross-section of a square, round or other shapes, and ventilation channel is closed and opened by the front and rear parallel movements. In normal ventilation, the valve core B2 is in the middle equilibrium position to provide ventilation function. When an explosion impact occurs, the shock wave pressure applied to the valve core B2 closes the valve core and blocks the shock wave from entering the protected side of the building or the ventilation system. When the shock wave changes from positive pressure to negative pressure, the valve core moves to the other side, reducing the ventilation passage until the valve core closes the ventilation passage. However, the existing antiknock valve adopts a large valve core design, therefor its opening B3 has a large length which results in low structural strength, so its ability to resist high-level shock wave is limited, wherein the current highest anti-explosion capability is 12bar high reflection pressure, lasting about 70ms. The weight of a single valve core is large, and the initial speed is slow under a certain impact wave impulse, resulting in a long closing time, and thus a larger part of the shock wave energy passes through the valve body, which poses a certain risk to the human beings and equipment at protected side.

Document EP 0 099 130 A2 discloses all the features of the preamble of claim 1.

### SUMMARY OF THE PRESENT INVENTION

An object of the present invention is to provide a valve body capable of explosion resistance. Another object of the invention is to provide a valve assembly capable of enhancing explosion-resistance and better response speed.

Another object of the present invention is to provide an antiknock valve with both sides resisting shock wave which can greatly reduce the weight of the valve core, can increase the blast-resistant strength, and can also increase the closing speed of the valve core to reduce the shock wave energy that passes through the passage of valve and eventually increases the safety performance of valve significantly.

The present invention relates to a bionic tortoise shell valve group for antiknocking having the features of claim 1. Further options are presented in claims 2-10.

### Beneficial effects

In the conventional arts, anti-shock wave ventilation valve adopts a large valve core design, the length of the opening in the valve body for the ventilation channel is long, the weight of a single valve core is large, the structural strength is low, and the initial speed of the valve core obtained under the impulse of the shock wave is low.
1) Two intersected supports are provided in the frame body, and openings, which are used for ventilation in the conventional arts, are provided on the support body with a short length, so that the weight and volume of a single valve core are greatly reduced, and the weight of the valve core is reduced which results in faster initial speed obtained under the impact of the shock wave, and the time for closing the ventilation passage is shortened, which greatly improves the response speed of the valve core when the shock wave arrives. In the conventional arts, under a reflected pressure of 10 bar by shock wave, the valve core's response speed is 1ms, and the valve core's response speed is 0.5ms in this invention.
2) For anti-knock valves of the same specification, the weight of a single valve core of the present invention is only one-tenth of the weight of a single valve core of the prior arts.
3) In present invention the parts subjected to impact is a triangular supporter formed by the two intersected supporters and the frame together, which greatly enhances the anti-knocking performance of the anti-knocking main body. The double-side anti-shock valve of the same type in the conventional art is only capable of resisting multiple shocks of the shock wave with a peak reflection pressure of 12 Bar, while the present invention can withstand multiple shocks of a shock wave with a peak emission pressure of 60 Bar, so the anti-explosion level is greatly enhanced.

### BRIEF DESCRIPTION OF THE DRAWINGS

Further description of the present invention is illustrated combining with the accompany drawings.
Fig. 1 is a first cooperation sketch view of a valve body and a valve core in the conventional art.
Fig. 2 is a second cooperation sketch view of a frame the valve body and the valve core in the conventional art.

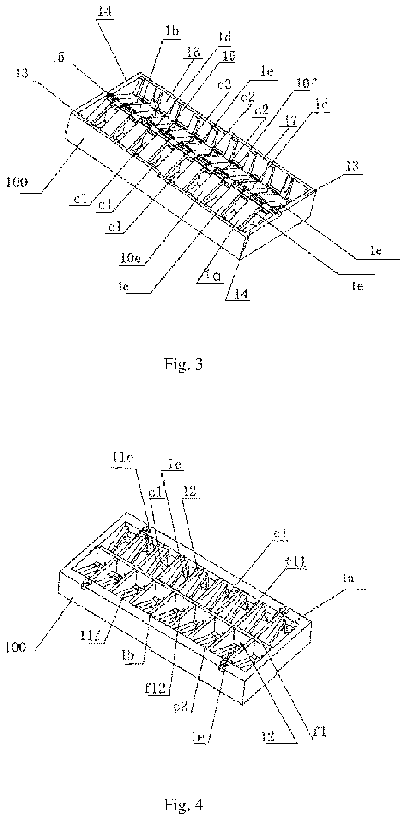

Fig. 3 is a front stereo image of a frame body 100 according to a first preferred embodiment of the present invention.
Fig. 4 is a back stereo image of the frame body 100 according to the first preferred embodiment of the present invention.
Fig. 5 is a sectional view of the frame body 100 according to the preferred embodiment of the present invention.
Fig. 6 is a top view of the frame body 100 from a front face according to the first preferred embodiment of the present invention.
Fig. 7 is a bottom view of the frame body 100 from a back face according to the first preferred embodiment of the present invention.
Fig. 8 is a front-stereo image of a first valve body A3 according to a second preferred embodiment of the present invention.
Fig. 9 is a back-stereo image of the first valve body A3 according to a second preferred embodiment of the present invention.
Fig. 10 is a sectional view of the first valve body A3 according to a second preferred embodiment of the present invention.
Fig. 11 is a front-stereo image of a first valve body A4 according to a second preferred embodiment of the present invention.
Fig. 12 is a back-stereo image of the first valve body A4 according to a second preferred embodiment of the present invention.
Fig. 13 is a sectional view of the first valve body A4 according to a second preferred embodiment of the present invention.
Fig. 14 is a stereo image of an antiknock valve according to the second preferred embodiment of the present invention.
Fig. 15 is a first sectional view antiknock valve according to the second preferred embodiment of the present invention.
Fig. 16 is a second sectional view antiknock valve according to the second preferred embodiment of the present invention.
Fig. 17 is a schematic view of a spring 301, a spring 302, a spring 303 and a spring 304 according to the second preferred embodiment of the present invention.

### Reference numbers in the Figs.

A1-valve body; B2-valve core; B3-opening; A3-first valve body; A4-second valve body; D-valve cavity; 100-first frame body; 101-second frame body; 102-third frame body; 201-first valve core; 202-second valve core; 20a-first windward face; 20b-second windward face; 20c-third windward face; 20d-fourth windward face; 301-first spring; 302-second spring; 303-third spring; 304-fourth spring; 5-fixture; 7-conenctor; 9-groove cavity;
1a-first supporter; c1-opening; 10e-first-supporter front face; 11-first-supporter back face;
1b-second supporter; c2-second opening; 10f-second-supporter front face; 11f- second-supporter back face;
1d-first spine; 1e-first framework; f1-first reinforcer; f11-second reinforcer; f12-third reinforcer;
2a-third supporter; 2c1-third opening; 2b-fourth supporter; 2c2-fourth opening;
2d-second spine; 2e-second framework; f2a-fourth reinforcer; f2b-fifth reinforcer; f2c-sixth reinforcer;
3a-fifth supporter; 3cl-fifth opening; 3b-sixth supporter; 3c2-sixth opening;
3d-third spine; 3e-third framework; f3a-seventh reinforcer; f3b-eighth reinforcer; f3c-ninth reinforcer;
10a-third-supporter front face; 10b-fourth-supporter front face; 10c-fifth-supporter front face; 10d-sixth-supporter front face;
11a-third-supporter back face; 11b-fourth supporter back face; 11c-fifth supporter back face; 11d-sixth supporter back face;
12-two intersected supporter internal side; 12a-two intersected supporter internal side; 12b-two intersected supporter internal side;
13-first up side face; 13a-second up side face; 13b-third up side face;
14-first step; 15-first stuck slot; 16-first internal side wall; 17-first limit slot;
14a-second step; 15a-second stuck slot; 16a-second internal side wall; 17a-second limit slot;
14b-third step; 15b-third stuck slot; 16b-third internal side wall; 17b-third limit slot;
81-first pin; 82-second pin; 83-third pin; 84-fourth pin

### DETAILED DESCRIPTION OF THE PREFERRED EMBODIMENT

In order to further illustrate the present invention and beneficial effects thereof, the present invention is described combining with the accompanying drawings. One skilled in the art will understand that the embodiment of the present invention as shown in the drawings and described above is exemplary only and not intended to be limiting.

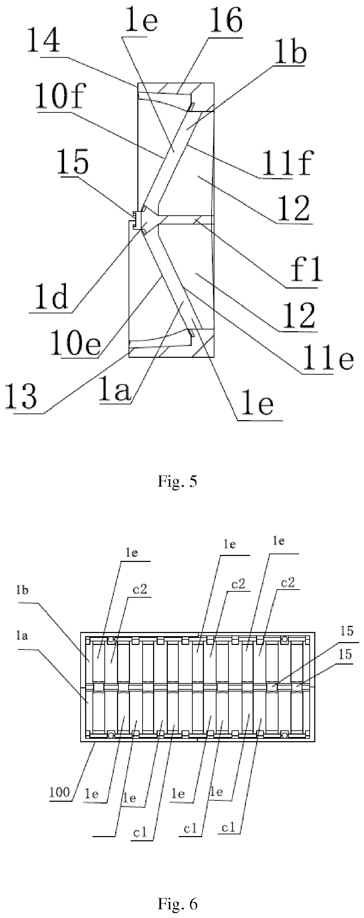

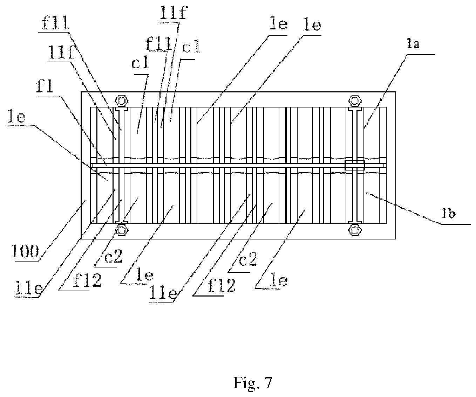

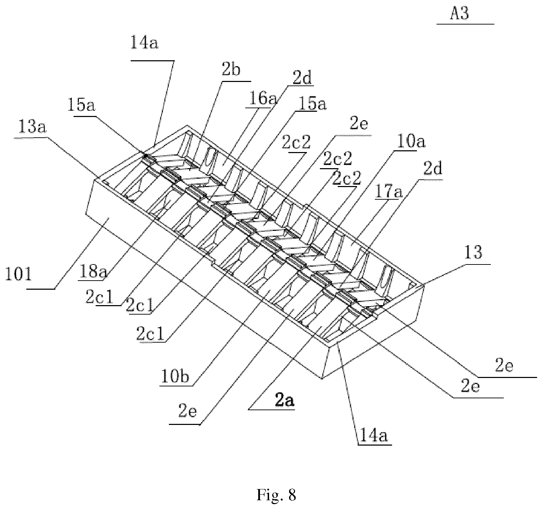

### Embodiment 1 (See Figs. 5-8 of the drawings)

A bionic tortoise shell valve body comprises: a first frame body 100 with a quadrilateral framework shape, a first supporter 1a and a second supporter 1b which are casted into an integrated body. The first supporter 1a and the second supporter 1b which are intersected and symmetrically provided in the first frame body 100. Openings c1 are provided with intervals on the first supporter 1a along a direction of a first spine 1d. Second openings c2 are provided with intervals on the second supporter 1b along a direction of the first spine 1d. The openings c1 on the first supporter 1a and the second openings c2 on the second supporter 1b are symmetrically provided. An intersected portion of the first supporter 1a and the second supporter 1b is a first spine 1d. The first supporter 1a and the second supporter 1b on two sides of the first spine 1d form a first framework 1e.

The first spine 1d extends towards two intersected supporter internal side 12 to form a first reinforce f1. A second reinforce f11 is provided on a first-supporter back face 11 of the first framework 1e. A third reinforce f12 is provided on a second-supporter back face 11f of the first framework 1e.

The second reinforce f11 is formed by extending the first supporter 1a towards the two intersected supporter internal side 12. The third reinforcer f12 is formed by extending the second supporter 1b towards the two intersected supporter internal side 12.

First steps 14 are provided on opposite angles of a first up side face of the first frame body 100. A first limit slot 17 is provided on a first internal side wall 16 of the first frame body 100. First stuck slots 15 are provided with intervals on the first spine 1d.

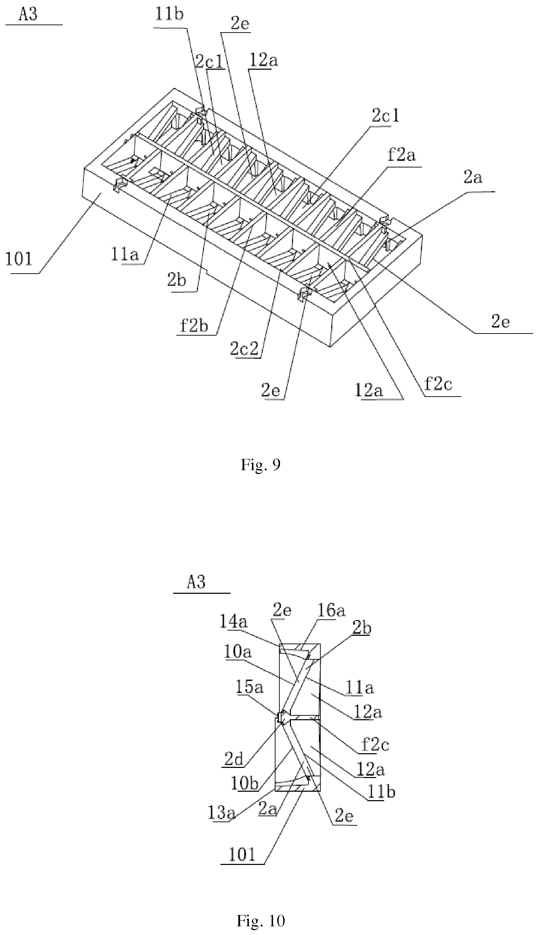

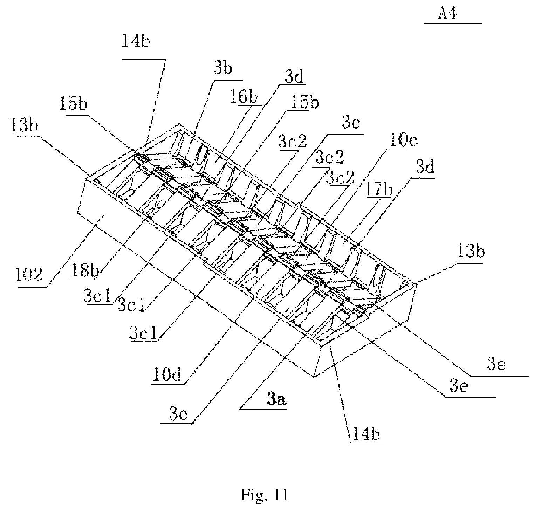

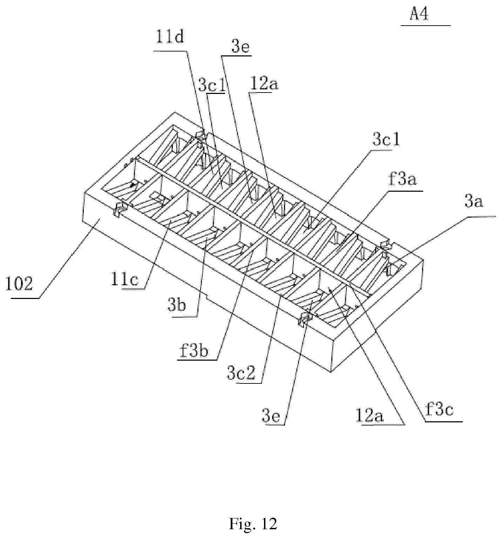

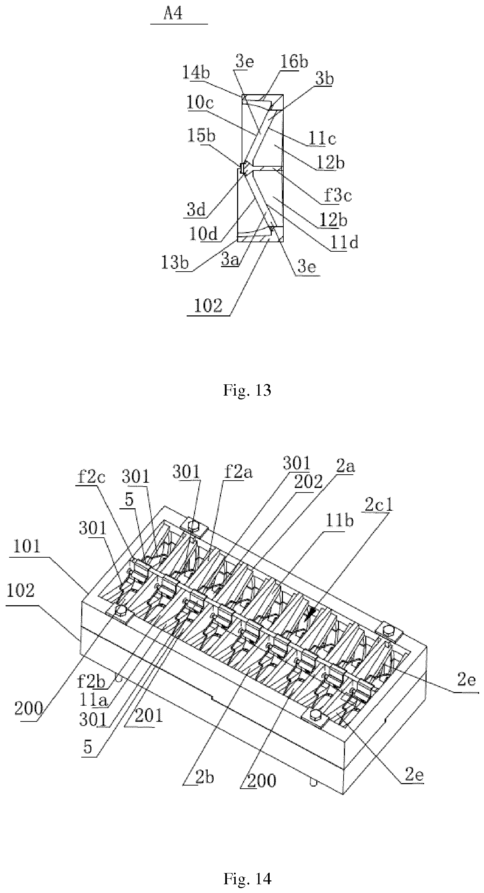

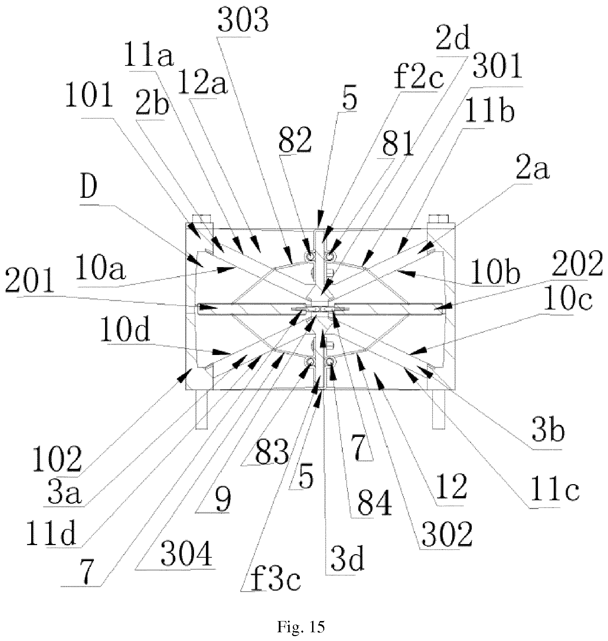

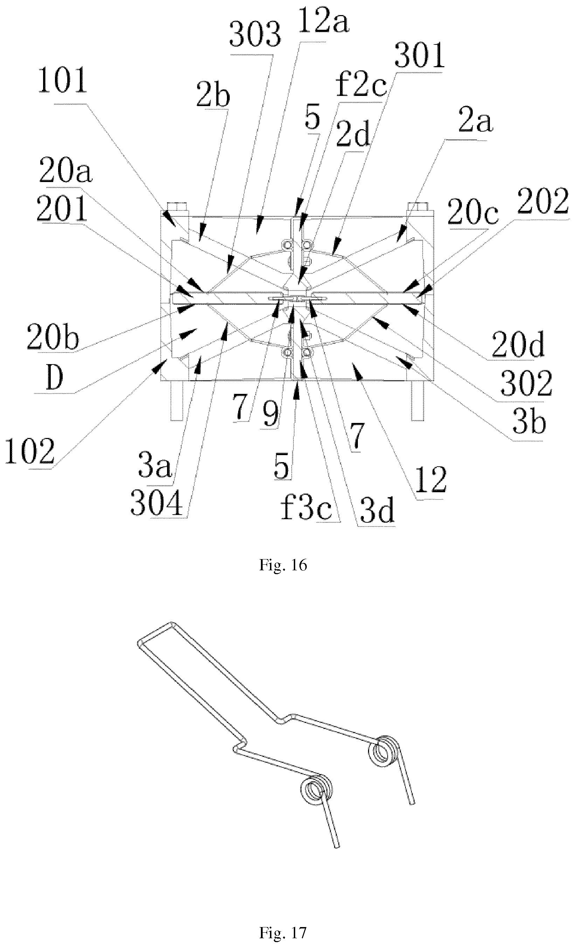

### Embodiment 2: See Figs 9-17 of the drawings.

A bionic tortoise-shell small valve core array antiknock valve comprises: a plurality of valve cores 200, a first valve body A3 and a second valve body A4.

The first valve body A3 comprises a second frame body 101 which is in a quadrilateral shape; a third supporter 2a and a fourth supporter 2b which are intersected are symmetrically provided in the second frame body 101; the second frame body 101 is integrated with the third supporter 2a and the fourth supporter 2b; an intersected portion of the third supporter 2a and the fourth supporter 2b is a second spine 2d; the third supporter 2a and the fourth supporter 2b on two sides of the second spine 2d is a second framework 2e; openings 2c1 are provided with intervals on the third supporter 2a along a direction of the second spine 2d; openings 2c2 are provided with intervals on the fourth supporter 2b along the second spine 2d; the openings 2c1 on the third supporter 2a and the openings 2c2 on the fourth supporter 2b are symmetrically provided; second steps 14a are provided on a second up side face 13a of the second frame body 101; a second limit slot 17a is provided on a second internal side wall 16a of the second frame body 101; second stuck slots 15a are provided with intervals on the second spine 2d; the second spine 2d is extended towards two intersected supporter internal side 12a to form a sixth reinforcer f2c; the second framework 2e is extended towards a third-supporter back face 11a of the third supporter 2a to form a fourth reinforce f2a; the second framework 2e is extended towards a fourth supporter back face 11b of the fourth supporter 2b to form a fifth reinforcer.

The second valve body A4 comprises a third frame body 102 which is in a quadrilateral shape; a fifth supporter 3a and a sixth supporter 3b which are intersected and are symmetrically provided in the third frame body 102 which is in a quadrilateral shape; the third frame body 102 is integrated with the fifth supporter 3a and the sixth supporter 3b; an intersected portion of the fifth supporter 3a and the sixth supporter 3b is a third spine 3d; the fifth supporter 3a and the sixth supporter 3b on two sides of the third spine 3d is a third framework 3e; openings 2c1 are provided with intervals on the fifth supporter 3a along a direction of the third spine 3d; openings 3c2 are provided with intervals on the sixth supporter 3b along the first spine 1d; the openings 3c1 on the fifth supporter 3a and the openings 2c2 on the sixth supporter 3b are symmetrically provided; third steps 14b are provided on a third up side face 14b of the third frame body 102; a third limit slot 17b is provided on a third internal side wall 16b of the third frame body 102; third stuck slots 15b are provided with intervals on the third spine 3d; the third spine 3d is extended towards two intersected supporter internal side 12b to form a seventh reinforcer f3c; the second framework 3e is extended towards a third-supporter back face 11d of the fifth supporter 3a to form a fifth reinforcer f3a; the third framework 3e is extended towards a fifth supporter back face 11d of the fifth supporter 3a to form a sixth reinforcer f3b.

The first valve body A3 and the second valve body A4 are coupled and fixed by a screw; wherein two second steps 14a are provided on two opposite angles of a first up side face 15a of the second frame body 101; two third steps 14b are provided on two opposite angles of a second up side face 15b of a third frame body 102; the two second steps 14a on the first up side face 15a of the second frame body 101 are engaged with the two third steps 14b on the second up side face 15b of a third frame body 102; the second stuck slots 15a are matched with the third stuck slots 15b to form a groove cavity 9.

A first end of the first valve core 201 is fixed with a first end of a connector 7; a second end of the connector 7 is rotatably mounted in the groove cavity 9; the first valve core 201 is provided between the fourth opening 2c2 and the fifth opening 3c1.

A first end of the second valve core 202 is connected with the first end of the connector 7; a second end of the connector 7 is rotratably mounted in the groove cavity 9; the second valve core 202 is provided between the third opening 2c1 and the sixth opening 3c2.

A first pin 81 passes through a first end of a first spring 301 to match with a fixture 5, the fixture 5 is fixed with the sixth reinforce f2c; both ends of the first pin 81 are fixedly connected with the fourth reinforce f2a; the first spring 301 is capable of rotating around the first pin 81; a second end of the first spring 301 is pressed on a third windward face 20c of the second valve core 202.

A fourth pin 84 passes through a first end of a second spring 302 to match with the fixture 5, the fixture 5 is fixed with a ninth reinforcer f3c; both ends of the fourth pin 84 are fixedly connected with an eighth reinforcer f3b; the second spring 302 is capable of rotating around the fourth pin 84; a second end of the second spring 302 is pressed on a fourth windward face 20d of the second valve core 202.

Under normal ventilation conditions, the second valve core 202 is in a middle portion of a valve cavity D under cooperation of the first spring 301 and the second spring 302, so as to ensure that a ventilation channel is turned on.

A second pin 82 passes through a first end of a third spring 303 to match with the fixture 5, the fixture 5 is fixed with the sixth reinforcer f2c; both ends of the second pin 82 are fixedly connected with the fifth reinforcer f2b; the third spring 303 is capable of rotating around the second pin 82; a second end of the third spring 303 is pressed on the first windward face 20a of the first valve core 201.

A third pin 83 passes through a first end of a third spring 304 to match with the fixture 5, the fixture 5 is fixed with the ninth reinforcer f3c; both ends of the third pin 83 are fixedly connected with a seventh reinforcer f3a; the fourth spring 304 is capable of rotating around the third pin 83; a second end of the fourth spring 304 is pressed on a second windward face 20b of the first valve core 201.

Under normal ventilation conditions, the first valve core 201 is in a middle portion of the valve cavity D under cooperation of the third spring 303 and the fourth spring 304, so as to ensure that the ventilation channel is turned on.

When the bionic tortoise-shell small valve core array antiknock valve meets positive-pressure shock wave or negative-pressure shock wave;
if the first valve core 201 rotates anticlockwise to contact the third framework 3e, i.e., the first valve core 201 contacts a fifth-supporter front face 10d; the second valve core 202 rotates clockwise to contact the third framework 3e, i.e., the second valve core 202 contacts the sixth-supporter front face 10c; the ventilation channel is turned off, the first valve core 201 and the second valve core 202 are in flakes;
if the first valve core 201 rotates clockwise to contact the second framework 2e, i.e., the first valve core 201 contacts a fourth-supporter front face 10a; the second valve core 202 rotates anticlockwise to contact the third framework 2e, i.e., the second valve core 202 contacts the third-supporter front face 10b; the ventilation channel is turned off.

During rotating process of the first valve core 201 and the second valve core 202, the first end of the first valve core 201 and the first end of the second valve core 202 rotate respectively in a second limit slot 17a and a third limit slot 17b.

By rotatably connecting the first valve core 201 and the second valve core 202 on the spine, a turning-off speed of the first valve core 201 and the second valve core improves from 1ms to 0.5ms under a reflected pressure of 10bar by shock wave; and a weight of valve core in this invention is only one-tenth of an weight of conventional valve core.

## Claims

1. A bionic tortoise shell valve group for antiknocking comprising: an array of valve cores (201, 202), a first valve body (A3) and a second valve body (A4); wherein the first valve body (A3) comprises a first frame body (100) and the second valve body (A4) comprises a second frame body (101); two supporters (1a, 1b, 2a, 2b, 3a, 3b) which are intersected are symmetrically provided in the first frame body (100) and the second frame body (101); openings ( c1, c2, 2c1, 2c2, 3c1, 3c2) are provided with intervals on each of the supporters (1a, 1b, 2a, 2b, 3a, 3b); the openings ( c1, c2, 2c1, 2c2, 3c1, 3c2) on the supporters (1a, 1b, 2a, 2b, 3a, 3b) are symmetrically provided; **characterized in that**
an intersected portion of the two supporters (1a, 1b, 2a, 2b, 3a, 3b) is a spine (1d, 2d, 3d); and each supporter (1a, 1b, 2a, 2b, 3a, 3b)on two sides of the spine (1d, 2d, 3d) is a framework (1e, 2e, 3e);
each frame body (100, 101, 102) and the two supporters (1a, 1b, 2a, 2b, 3a, 3b) which are intersected are an integrated body;
each of the valve cores (201, 202) is provided above a respective opening (c1, c2, 2c1, 2c2, 3cl, 3c2) of each supporter (1a, 1b, 2a, 2b, 3a, 3b);
the valve bodies (A3, A4) are matched and fixed; wherein front faces (10a, 10b, 10c, 10d, 10e, 10f) of the supporters (1a, 1b, 2a, 2b, 3a, 3b) of the valve bodies (A3, A4) are opposite and connected with the up side faces (13, 13a, 13b) of the frame bodies (100, 101, 102);
a first end of each valve core ( 201, 202) is rotatably connected and mounted with the spine (1d, 2d, 3d), the valve core ( 201, 202) provided in a middle portion of the valve cavity (D) formed between the supporters (1a, 1b, 2a, 2b, 3a, 3b) by springs (301, 302, 303, 304) fixed on a respective frame body (100, 101, 102); such that two valve bodies are provided one above another.

2. The bionic tortoise shell valve group for antiknocking, as recited in claim 1, wherein reinforcers (f1, f11, f12, f2a, f2b, f2cf3a, f3b, f3c) are provided on a respective back face (11, 11a, 11b, 11c, 11d, 11f) of each supporter (1a, 1b, 2a, 2b, 3a, 3b) ;
wherein the reinforcers (f1, f11, f12, f2a, f2b, f2cf3a, f3b, f3c) are formed by extending the spine (1d, 2d, 3d) towards an internal side (12, 12a, 12b) of the supporters (1a, 1b, 2a, 2b, 3a, 3b).

3. The bionic tortoise shell valve group for antiknocking, as recited in claim 1, wherein reinforcers (f1, f11, f12, f2a, f2b, f2cf3a, f3b, f3c) are provided on a respective back face (11, 11a, 11b, 11c, 11d, 11f) of each supporter (1a, 1b, 2a, 2b, 3a, 3b),
wherein the reinforcers (f1, f11, f12, f2a, f2b, f2cf3a, f3b, f3c) are formed by extending the framework (1e, 2e, 3e) of the supporters (1a, 1b, 2a, 2b, 3a, 3b) towards respective internal sides (12, 12a, 12b) of the supporters (1a, 1b, 2a, 2b, 3a, 3b).

4. The bionic tortoise shell valve group for antiknocking, as recited in one of claims 1 to 3, wherein steps (14, 14a, 14b) are provided on an up side face (13, 13a, 13b) of each frame body (100); wherein the steps (14, 14a, 14b) on the up side faces (13, 13a, 13b) of the first valve body (A3) are engaged with the steps (14, 14a, 14b) on the up side face (13, 13a, 13b) of the second valve body (A4).

5. The bionic tortoise shell valve group for antiknocking, as recited in claim 4, wherein first limit slots (17) are provided on an internal side wall (16, 16a, 16b) of the first frame body (100); second limit slots (17b) are provided on an internal side wall (16, 16a, 16b) of the second frame body (101); the first limit slots (17) and the second limit slots (17b) configured for guiding second ends of the valve cores (201, 202) when the valve cores ( 201, 202) rotate..

6. The bionic tortoise shell valve group for antiknocking as recited in claim 1, wherein each valve core (201, 202) is flake shaped.

7. The bionic tortoise shell valve group for antiknocking as recited in claim 1, wherein stuck slots (15, 15a, 15b) are provided on the valve bodies (A3, A4) at the spine (1d, 2d, 3d), the stuck slots (15, 15a, 15b) of the two valve bodies (A3, A4) cooperating to form groove cavities (9); for each valve core ( 201, 202) a first end of a connector (7) being stuck in a respective groove cavity (9); and a second end of the connector (7) being connected with an end of the valve core (201, 202).

8. The bionic tortoise shell valve group for antiknocking as recited in claim 1, wherein steps (14, 14a, 14b) are provided on the frame bodies (100, 101, 102) and configured such that when the two valve bodies (A3, A4) are matched and fixed, steps (14, 14a, 14b) on an up side face (13, 13a, 13b) of the two frame bodies (100, 101, 102) are engaged.

9. The bionic tortoise shell valve group for antiknocking as recited in claim 8, wherein when the two valve bodies (A3, A4) are matched and fixed, the openings ( c1, c2, 2c1, 2c2, 3c1, 3c2) on the two valve bodies (A3, A4) are symmetrically provided.

10. A building ventilated through a bionic tortoise shell valve group for antiknocking as claimed in one of claims 1 to 9.

## Patentansprüche

1. Bionische Schildpattventilgruppe für Antiklopfvorrichtungen umfassend: eine Anordnung von Ventileinsätzen (201, 202), einen ersten Ventilkörper (A3) und einen zweiten Ventilkörper (A4);
wobei der erste Ventilkörper (A3) einen ersten Rahmenkörper (100) und der zweite Ventilkörper (A4) einen zweiten Rahmenkörper (101) umfasst; zwei
Träger (1a, 1b, 2a, 2b, 3a, 3b), die
sich schneiden, symmetrisch in dem ersten Rahmenkörper (100) und dem zweiten Rahmenkörper (101) angeordnet sind; Öffnungen
(c1, c2, 2c1, 2c2, 3c1, 3c2) mit Zwischenräumen an jedem der Träger (1a, 1b, 2a, 2b, 3a, 3b) angeordnet sind; die Öffnungen
(c1, c2, 2c1, 2c2, 3c1, 3c2) an den Trägern
(1a, 1b, 2a, 2b, 3a, 3b) symmetrisch angeordnet sind; **dadurch gekennzeichnet, dass** ein sich schneidender Abschnitt der beiden Träger (1a, 1b, 2a, 2b, 3a, 3b) eine Wirbelanordnung (1d, 2d, 3d) ist; und jeder Träger (1a, 1b, 2a, 2b, 3a, 3b) auf zwei Seiten der Wirbelanordnung (1d, 2d, 3d) ein Rahmen (1e, 2e, 3e) ist;
jeder Rahmenkörper (100, 101, 102) und die beiden Träger (1a, 1b, 2a, 2b, 3a, 3b), die sich schneiden, ein integrierter Körper sind;
jeder der Ventileinsätze (201, 202) oberhalb einer entsprechenden Öffnung (c1, c2, 2c1, 2c2, 3c1, 3c2) jedes Trägers (1a, 1b, 2a, 2b, 3a, 3b) angeordnet ist;
die Ventilkörper (A3, A4) aufeinander abgestimmt und fixiert sind; wobei Vorderseiten (10a, 10b, 10c, 10d, 10e, 10f) der Träger (1a, 1b, 2a, 2b, 3a, 3b) der Ventilkörper (A3, A4) einander gegenüberliegen und mit den Oberseiten (13, 13a, 13b) der Rahmenkörper (100, 101, 102) verbunden sind;
ein erstes Ende jedes Ventileinsatzes
(201, 202) drehbar mit der Wirbelanordnung
(1d, 2d, 3d) verbunden und gelagert ist,
wobei der Ventileinsatz (201, 202) in einem mittleren Abschnitt des Ventilhohlraums (D) angeordnet ist,
der zwischen den Trägern (1a, 1b, 2a, 2b, 3a, 3b) durch Federn (301, 302, 303, 304) gebildet ist, die an einem jeweiligen Rahmenkörper (100, 101, 102) befestigt sind; so dass
zwei Ventilkörper übereinander angeordnet sind.

2. Bionische Schildpattventilgruppe für Antiklopfvorrichtungen nach Anspruch 1, wobei Verstärkungsmittel (f1, f1 1, f1 2, f2a, f2b, f2cf3a, f3b, f3c) auf einer jeweiligen Rückseite (11, 11a, 11b, 11c, 11d, 11f) jedes Trägers (1a, 1b, 2a, 2b, 3a, 3b) angeordnet sind;
wobei die Verstärkungsmittel (f1, f1 1, f1 2, f2a, f2b, f2cf3a, f3b, f3c) durch Ausdehnen der Wirbelanordnung (1d, 2d, 3d) zu einer inneren Seite (12, 12a, 12b) der Träger (1a, 1b, 2a, 2b, 3a, 3b) gebildet sind.

3. Bionische Schildpattventilgruppe für Antiklopfvorrichtungen nach Anspruch 1, wobei Verstärkungsmittel (f1, f1 1, f1 2, f2a, f2b, f2cf3a, f3b, f3c) an der jeweiligen Rückseite (11, 11a, 11b, 11c, 11d, 11f) jedes Trägers (1a, 1b, 2a, 2b, 3a, 3b) angeordnet sind,
wobei die Verstärkungsmittel (f1, f1 1, f1 2, f2a, f2b, f2cf3a, f3b, f3c) durch Ausdehnen des Rahmens (1e, 2e, 3e) der Träger (1a, 1b, 2a, 2b, 3a, 3b) zu den jeweiligen Innenseiten (12, 12a, 12b) der Träger (1a, 1b, 2a, 2b, 3a, 3b) gebildet sind.

4. Bionische Schildpattventilgruppe für Antiklopfvorrichtungen, nach den Ansprüchen 1 bis 3, wobei Absätze (14, 14a, 14b) auf einer Oberseite (13, 13a, 13b) jedes Rahmenkörpers (100) angeordnet sind; wobei die Absätze (14, 14a, 14b) auf den Oberseiten (13, 13a, 13b) des ersten Ventilkörpers (A3) mit den Absätzen (14, 14a, 14b) auf der Oberseite (13, 13a, 13b) des zweiten Ventilkörpers (A4) in Eingriff stehen.

5. Bionische Schildpattventilgruppe für Antiklopfvorrichtungen nach Anspruch 4, wobei erste Begrenzungsschlitze (17) an einer inneren Seitenwand (16, 16a, 16b) des ersten Rahmenkörpers (100) angeordnet sind; zweite Begrenzungsschlitze (17b) an einer inneren Seitenwand (16, 16a, 16b) des zweiten Rahmenkörpers (101) angeordnet sind; die ersten Begrenzungsschlitze (17) und die zweiten Begrenzungsschlitze (17b) zum Führen zweiter Enden der Ventileinsätze (201, 202) bei Drehung der Ventileinsätze (201, 202) konfiguriert sind.

6. Bionische Schildpattventilgruppe für Antiklopfvorrichtungen nach Anspruch 1, wobei jeder Ventileinsatz (201, 202) schuppenförmig ist.

7. Bionische Schildpattventilgruppe für Antiklopfvorrichtungen nach Anspruch 1, wobei an den Ventilkörpern (A3, A4) an der Wirbelanordnung (1d, 2d, 3d) Steckschlitze (15, 15a, 15b) angeordnet sind, wobei die Steckschlitze (15, 15a, 15b) der beiden Ventilkörper (A3, A4) zum Bilden von Nuthohlräumen (9) zusammenwirken; für jeden Ventileinsatz
(201, 202) ein erstes Ende eines Verbindungsteils (7) in einem entsprechenden Nuthohlraum (9) steckt; und ein zweites Ende des Verbindungsteils (7) mit einem Ende des Ventileinsatzes (201, 202) verbunden ist.

8. Bionische Schildpattventilgruppe für Antiklopfvorrichtungen nach Anspruch 1, wobei Absätze (14, 14a, 14b) an den Rahmenkörpern (100, 101, 102) angeordnet und so konfiguriert sind, dass, wenn die beiden Ventilkörper (A3, A4) aufeinander abgestimmt und fixiert sind, die Absätze (14, 14a, 14b) an einer Oberseite (13, 13a, 13b) der beiden Rahmenkörper (100, 101, 102) in Eingriff stehen.

9. Bionische Schildpattventilgruppe für Antiklopfvorrichtungen nach Anspruch 8, wobei, wenn die beiden Ventilkörper (A3, A4) aufeinander abgestimmt und befestigt sind, die Öffnungen (c1, c2, 2c1, 2c2, 3c1, 3c2)
an den beiden Ventilkörpern (A3, A4) symmetrisch angeordnet sind.

10. Gebäude nach einem der Ansprüche 1 bis 9, das durch eine bionische Schildpattventilgruppe für Antiklopfvorrichtungen belüftet wird.

## Revendications

1. Groupe de valve en écaille de tortue bionique contre les détonations, comprenant :
un ensemble d'obus de valve (201, 202), un premier corps de valve (A3) et un deuxième corps de valve (A4) ;
dans lequel le premier corps de valve (A3) comprend un premier corps de cadre (100) et le deuxième corps de valve (A4) comprend un deuxième corps de cadre (101) ; deux supports (1a, 1b, 2a, 2b, 3a, 3b) entrecroisés sont disposés symétriquement dans le premier corps de cadre (100) et le deuxième corps de cadre (101) ; des ouvertures (c1, c2, 2c1, 2c2, 3c1, 3c2) sont disposées selon des intervalles sur chacun des supports (1a, 1b, 2a, 2b, 3a, 3b) ; les ouvertures (c1, c2, 2c1, 2c2, 3c1, 3c2) sur les supports (1a, 1b, 2a, 2b, 3a, 3b) sont disposées symétriquement; **caractérisé en ce qu'**une partie entrecroisée des deux supports (1a, 1b, 2a, 2b, 3a, 3b) est une arête (1d, 2d, 3d) ; et chaque support (1a, 1b, 2a, 2b, 3a, 3b) sur deux côtés de l'arête (1d, 2d, 3d) est une structure (1e, 2e, 3e) ;
chaque corps de cadre (100, 101, 102) et les deux supports (1a, 1b, 2a, 2b, 3a, 3b) entrecroisés sont un corps intégral ;
chacun des obus de valve (201, 202) est disposé au-dessus d'une ouverture (c1, c2, 2c1, 2c2, 3c1, 3c2) respective de chaque support (1a, 1b, 2a, 2b, 3a, 3b) ;
les corps de valve (A3, A4) sont mis en correspondance et fixés ; dans lequel des faces avant (10a, 10b, 10c, 10d, 10e, 10f) des supports (1a, 1b, 2a, 2b, 3a, 3b) des corps de valve (A3, A4) sont opposées et reliées aux faces supérieures (13, 13a, 13b) des corps de cadre (100, 101, 102) ;
une première extrémité de chaque obus de valve (201, 202) est reliée de façon rotative à l'arête (1d, 2d, 3d) et montée sur celle-ci, l'obus de valve (201, 202) est disposé dans une partie centrale de la cavité de valve (D) formée entre les supports (1a, 1b, 2a, 2b, 3a, 3b) par des ressorts (301, 302, 303, 304) fixés sur un corps de cadre (100, 101, 102) respectif, de telle façon que deux corps de valve sont disposés l'un au-dessus de l'autre.

2. Groupe de valve en écaille de tortue bionique contre les détonations selon la revendication 1, dans lequel des renforts (f1, f11, f12, f2a, f2b, f2cf3a, f3b, f3c) sont disposés sur une face arrière (11, 11a, 11b, 11c, 11d, 11f) de chaque support (1a, 1b, 2a, 2b, 3a, 3b) ;
dans lequel les renforts (f1, f11, f12, f2a, f2b, f2cf3a, f3b, f3c) sont formés en étirant l'arête (1d, 2d, 3d) vers un côté intérieur (12, 12a, 12b) des supports (1a, 1b, 2a, 2b, 3a, 3b).

3. Groupe de valve en écaille de tortue bionique contre les détonations selon la revendication 1, dans lequel des renforts (f1, f11, f12, f2a, f2b, f2cf3a, f3b, f3c) sont disposés sur une face arrière (11, 11a, 11b, 11c, 11d, 11f) respective de chaque support (1a, 1b, 2a, 2b, 3a, 3b),
dans lequel les renforts (f1, f11, f12, f2a, f2b, f2cf3a, f3b, f3c) sont formés en étirant la structure (1e, 2e, 3e) des supports (1a, 1b, 2a, 2b, 3a, 3b) vers des côtés intérieurs (12, 12a, 12b) respectifs des supports (1a, 1b, 2a, 2b, 3a, 3b).

4. Groupe de valve en écaille de tortue bionique contre les détonations selon l'une des revendications 1 à 3, dans lequel des gradins (14, 14a, 14b) sont disposés sur une face supérieure (13, 13a, 13b) de chaque corps de cadre (100) ; dans lequel les gradins (14, 14a, 14b) sur les faces supérieures (13, 13a, 13b) du premier corps de valve (A3) sont engagés avec les gradins (14, 14a, 14b) sur la face supérieure (13, 13a, 13b) du deuxième corps de valve (A4).

5. Groupe de valve en écaille de tortue bionique contre les détonations selon la revendication 4, dans lequel des premières fentes de limitation (17) sont disposées sur une paroi latérale intérieure (16, 16a, 16b) du premier corps de cadre (100) ; des deuxièmes fentes de limitation (17b) sont disposées sur une paroi latérale intérieure (16, 16a, 16b) du deuxième corps de cadre (101) ; les premières fentes de limitation (17) et les deuxièmes fentes de limitation (17b) sont configurées pour guider des deuxièmes extrémités des obus de valve (201, 202) lorsque les obus de valve (201, 202) sont en rotation.

6. Groupe de valve en écaille de tortue bionique contre les détonations selon la revendication 1, dans lequel chaque obus de valve (201, 202) présente une forme d'écaille.

7. Groupe de valve en écaille de tortue bionique contre les détonations selon la revendication 1, dans lequel des fentes bloquées (15, 15a, 15b) sont disposées sur les corps de valve (A3, A4) au niveau de l'arête (1d, 2d, 3d), les fentes bloquées (15, 15a, 15b) des deux corps de valve (A3, A4) coopèrent pour former des cavités de rainure (9) ; pour chaque obus de valve (201, 202), une première extrémité d'un connecteur (7) est bloquée dans une cavités de rainure (9) respective ; et une deuxième extrémité du connecteur (7) est reliée à une extrémité de l'obus de valve (201, 202).

8. Groupe de valve en écaille de tortue bionique contre les détonations selon la revendication 1, dans lequel des gradins (14, 14a, 14b) sont disposés sur les corps de cadre (100, 101, 102) et configurés de telle façon que lorsque les deux corps de valve (A3, A4) sont mis en correspondance et fixés, des gradins (14, 14a, 14b) sur une face supérieure (13, 13a, 13b) des deux corps de cadre (100, 101, 102) sont engagés.

9. Groupe de valve en écaille de tortue bionique contre les détonations selon la revendication 8, dans lequel, lorsque les deux corps de valve (A3, A4) sont mis en correspondance et fixés, les ouvertures (c1, c2, 2c1, 2c2, 3c1, 3c2) sur les deux corps de valve (A3, A4) sont disposées symétriquement.

10. Bâtiment ventilé à l'aide d'un groupe de valve en écaille de tortue bionique contre les détonations selon l'une des revendications 1 à 9.
